# EUROPEAN PATENT APPLICATION

(11) **EP 4 776 119 A1**
(43) Date of publication of application: **15.07.2026**
(21) Application number: 25150708.3
(22) Date of filing: 08.01.2025
(51) Int. Cl.: G06F 8/33, G06N 20/00, G06F 8/35

(54) **TECHNIQUES FOR DATA FORMAT ADAPTATION**

(71) Applicant: Siemens Aktiengesellschaft, 80333 München (DE); Friedrich-Alexander-Universität Erlangen-Nürnberg, 91054 Erlangen (DE)
(72) Inventor: MAHR, Felix, 90403 Nürnberg (DE); GREINER, Dominik, Kümmersbruck (DE); SCHMIDT, Konstantin, 91096 Möhrendorf (DE); FRANKE, Jörg, 91080 Marloffstein (DE)
(74) Representative: Siemens Patent Attorneys

(57) **Abstract**

A, preferably computer-implemented, method of automatic data format adaptation, the method comprising the steps of: determining machine data generated by one or more machines controlling a production process, the machine data being incompatible with a data parser, prompting a computational model for language processing, LLM, with the incompatible machine data and a desired output data format, e.g., with machine data in the desired output data format, for the LLM to generate a program code capable of converting the incompatible machine data into the desired output data format, updating the data parser to comprise the program code capable of converting the incompatible machine data into the desired output data format.

## Description

*Independent of the grammatical term usage, individuals with male, female or other gender identities are included within the term.*

### Technical Field

The present disclosure is concerned with the application of artificial intelligence, in particular machine learning, in industrial environments, e.g., for the production and/or quality control of one of more products.

### Background

The application of artificial intelligence, especially machine learning in production environments, holds considerable potential. Production systems and the machines therein act as indispensable data sources for these data-driven applications. The increased automation can both increase the degree of automation and reduce costs.

From international patent application WO 2022003007 A1 it has become known to determine a decrease in accuracy of a trained function under a distribution drift of incoming data.

Furthermore, it has become known from international patent application WO 2022003011 A1 to determine a distribution drift of the incoming data using anomaly detection models.

From international patent application WO2021028135A1 a system for generation of a holistic digital twin of an industrial facility has become known, said system comprising conversion units adapted to convert asset related data collected from different tools used for planning and/or operation of said industrial facility in a tool specific data format and asset related data provided by data sources of the industrial facility in a data source specific data format into a common graph representation.

Still further, international patent application WO2023237288A1 discloses determining if input data of a device is suitable for processing with a trained function; the trained function providing output data being suitable for analyzing and/or controlling the respective device.

### Summary

Machine data may be provided in different formats or files such as json, csv, and txt. However, these formats often contain redundant information. For effective use, this information must be filtered, pre-processed, and put into an appropriate data format. This process can be summarized under the term "parsing", which may take place in edge device or edge layer. The static programming of a parsing script however poses a challenge. Dynamic changes to the (raw) machine data formats and their structure, which are made, e.g., by the machine manufacturers, for example through updates, can lead to an unexpected failure of the parsing script. The data parsing however is an indispensable preparation step for example for machine learning applications, and thus to the control of the production process.

An improved data format adaptation is thus proposed herein.

According to a first aspect, a, preferably computer-implemented, method of automatic data format adaptation is proposed. The method comprising the step of determining machine data generated by one or more machines controlling a production process, the machine data being incompatible with a data parser. The method further comprising prompting a computational model for language processing, LLM, with the incompatible machine data and a desired output data format, e.g., with machine data in the desired output data format, for the LLM to generate a program code capable of converting the incompatible machine data into the desired output data format. The method further comprising updating the data parser to comprise the program code capable of converting the incompatible machine data into the desired output data format.

According to a second aspect an apparatus, preferably comprising a processor and a memory, is proposed. The apparatus operative to perform the method steps of any one of the preceding claims.

According to a third aspect a computer program comprising program code that when executed performs the method steps according to the first aspect.

### Brief description of the drawings

Figure 1 shows an illustration of a production system comprising one or more machines performing and/or executing one or more processes for producing a product.
Figure 2 illustrates a parser on an edge device and computational model for language processing used for updating the parser.
Figure 3 illustrates further details of the update of the parser using the computational model for language processing.
Figure 4 illustrates the test and validation of a parser update.
Figures 6 to 12 illustrate exemplary steps of the data format adaptation and/or the parser update.

### Detailed description

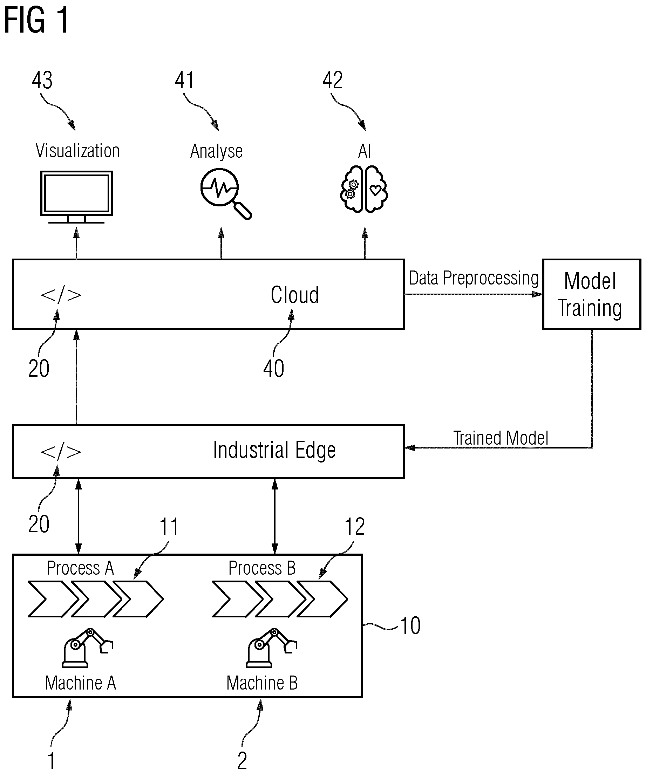

Figure 1 shows a production system 10 comprising one or more machines 1, 2 performing and/or executing one or more processes 11, 12 for producing a product. The analytics of the machine data produced by the one or more machines 1, 2 is playing an ever-increasing role. The data analytics in manufacturing can be leveraged to produce faster, more reliable products, increase production line efficiency, and enable more automation across the production system. When machine and equipment manufacturers have transparency into how their product is being used on a day-to-day basis, they can compare how the one or more machines 1, 2 are being used, e.g., versus how the one or more machines 1, 2 were designed. Access to this machine data can provide valuable insight into how the next iteration of a machine and/or product is built. Combining the machine data with machine learning, a simulation software, and/or the digital twin, manufacturers can use closed-loop validation to design and/or build a faster, more reliable next-generation machine and/or product. Additionally, when a manufacturer of the machine and/or the product knows exactly how a machine 1, 2 is operating through data analytics, they have a better understanding of the regular wear and tear of individual parts of the one or more machines 1, 2, which for example can provide more accurate predictive maintenance. Based on the machine data, machine or entire production system shutdowns can be planned for the most optimal time, and maintenance can ensure all the right parts are ready. A production system can comprise one or more production lines.

Gathering and/or storing the machine data of the one or more machines 1, 2 made it possible to harness the massive amounts of data machines produce every day during normal operations. The machine data may be collected or generated by one or more sensors comprised in, attached to, and/or in the vicinity of the one or more machines 1, 2. The one or more sensors may thus collect valuable machine data, e.g., comprising operational data and system data as well, and sent it (via an edge device/layer) to a cloud-based analytics software 41. The data analytics 41 can spot trends to help manufacturers make better decisions regarding maintenance, quality, and planning, and enable faster decision making than before with all the machine data organized in a centralized location, i.e. said cloud 40.

In particular, when it comes to machine learning applications, data integrity is elementary. Since the composition of the machine data might change at any time, e.g., by adding, renaming or removing of data channels, in the production system, in an Enterprise Resource Planning, ERP, system, and/or Manufacturing Execution System, MES. This may introduce data inconsistencies which can often go unnoticed in deployed machine learning systems 42. The consequence may be an adverse impact on performance of machine learning models, e.g. in said machine learning system 42, especially when automated data pipelines are used. Instead and/or additionally the, e.g., parsed and/or (pre-)processed, machine data may be visualized for example on a display 43.

Independent of the cause for a change in the customer's IT/OT landscape, the resulting data may have an unknown impact on the machine learning model's reliability. This poses the constant challenge to keep models up to date with both high performance and reliability to generate the promised value to the customer.

An ML model, e.g. in said machine learning systems 42, may be used for predicting the quality of a manufactured product or component, and, e.g., replaces an end-of-line test. The ML model plays a crucial role in the production process, with the same importance and expected reliability as any other piece of machinery in the production system. Hence, it immediately becomes apparent that it is of utmost importance to ensure continuous reliability of the ML system 42.

As shown in Figure 1, an ML application in ML system 42 receives data input from an information technology, IT, and/or operational technology, OT system. After importing and preprocessing, a ML-core application, i.e., the ML model, processes the data and infers a model output. For example, in a quality prediction use case this would typically be a score related to product quality, which can be interpreted as the probability of an acceptable or faulty part. The application provides this quality prediction to one or more other device and/or software modules, e.g., a MES system to directly adjust process parameters or simply for operator visualization.

Now, as should have become clear already, data consistency is of utmost importance for operating a production system or any kind of industrial system, or industrial process or application.

It is necessary to correctly parse the machine data obtained from one or more of the machines 1, 2 controlling a production process 11, 12.

As will become apparent in the following the format in which the machine data is generated, transmitted, stored, or otherwise obtained may change due to different circumstances. The same applies for the visualization of the machine data, e.g. on a display, which e.g. may be performed based on the machine data stored in the cloud 40.

As shown in Figure 1 for the sake of ML model training the data stored in the cloud 40 may be preprocessed. The ML model may then be trained on the preprocessed machine data and the trained model may be deployed on an edge layer, e.g. an (industrial) edge device. The data preprocessing and model training may also be performed on a cloud infrastructure 40.

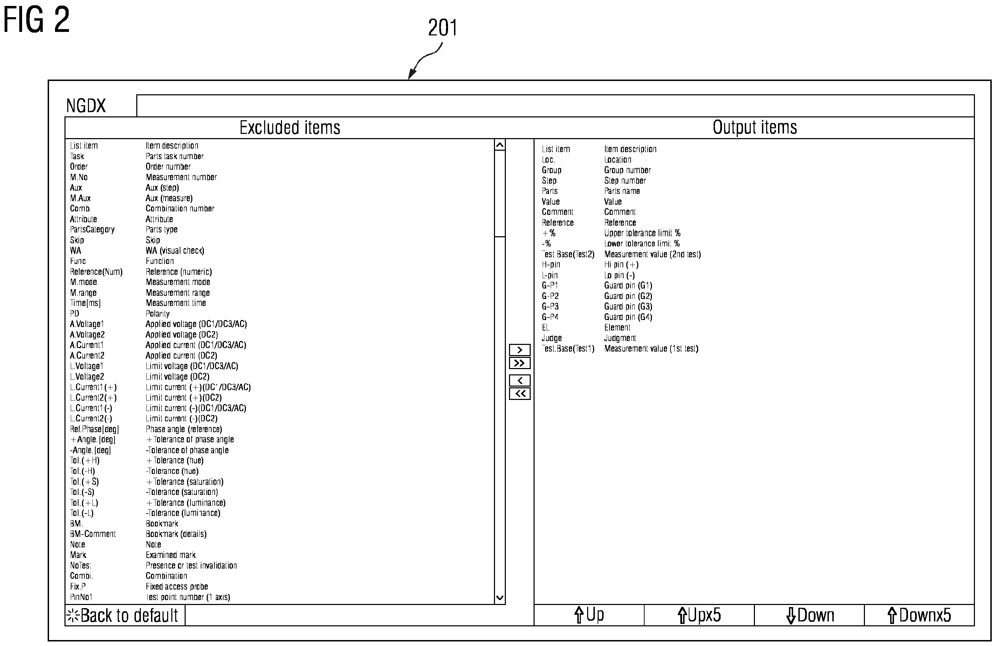

In Figure 2 the data elements in the data format of the machine data generated, e.g., by the one or more machines 1, 2 as for example shown in Figure 1, are illustrated. As shown, the data format in which the machine data may be generated and/or transmitted and/or stored may be configured. That is, one or more of the available data elements 201 may be selected to be transmitted by the machine 1, 2. For example, a user may select one or more data elements 201 to be included in the data format of the machine data. Exemplary data elements, or items, of a power supply device are shown. The data elements 201 may be selected to be communicated to an edge and/or cloud platform to be processed, e.g., by an ML application, for example to predict a fault in the machine or to detect an anomaly in the production process. Such data elements are grouped and denoted as "Output items" in Figure 2. The remaining data elements are grouped and denoted as "Excluded items" in Figure 2. For an additional application which may be deployed on the edge (device) or the cloud (platform), additional and thus other data than the one already generated, selected and/or transmitted may be required. Thus, the data format generated, stored, and/or transmitted by the machine may change. The data elements 201 available are shown on the left side of Figure 2, whereas the data elements selected are shown on the right side of Figure 2. Selection and/or deletion of data elements 201 to be comprised in the data format (to be) generated and/or transmitted and/or stored by the one or more machines.

Now, before (further) processing the machine data, the machine data needs to be parsed. That is, the relevant information in the machine data for a subsequent processing, e.g., by one or more software applications, as for example in Figure 1, needs to be determined. For example, the numerical values relating to the one or more data elements in the machine data need to be identified and/or isolated, and the remaining data items may need to be discarded or otherwise processed.

To that end, a data parser 20, e.g., in the form of a parsing script may be used. A parser may be programmed and/or tested, e.g., using said parsing script in a local development environment, using some test data and/or conditional test cases. After successful completion, the parser may be deployed, e.g., integrated into the live operation of the production system. To ensure and/or monitor proper functioning of the parser 20, one or more log files may be written when executing the parser, and/or the parser's runtime may be continuously monitored.

Parsing, syntax analysis, or syntactic analysis is the process of analyzing a string of symbols, either in natural language, computer languages or data structures, conforming to the rules of a formal grammar. Hence, parsing may be understood as syntactic analysis of the input code into its component parts to facilitate a further processing of the machine data or parts thereof.

Now, in the event of errors and/or changes to the format of the machine data, e.g., the file formats due to system adjustments, as e.g. described in connection with Figure 2, these had to be examined manually and/or requested from the plant expert or manufacturer. This process involved a manual adjustment of the parsing script by a data engineer. The data engineer may have tested the functionality of the parsing script again in his local development environment and then transferred it to live operation.

For example, changes or faults in the (format of) the machine data one or more additional machines may be installed in the production system. Or, one or more machines1 ,2 receive a software update due to which the output format of the machine data of that machine is changed, e.g., since additional parameters or function have become available or have been removed in the updated software. Furthermore, the case may appear that the output format of the machine 1, 2 and thus the data format of the machine data is changed due to a change in the configuration of that machine 1, 2.

For the analysis of the parsing scripts in the event of an error, and when changing the parsing script, tools such as GitHub-CoPilot could be used for support. Nevertheless, the data engineer had to evaluate the proposals, integrate them manually and test them. These steps could be implemented with a new solution in a process to automatically change the parsing logic.

Previous solutions to the data (pre-)processing problem have focused primarily on the detection of raw data formats and/or visual traceability. However, a dynamic adjustment of the parsing logic did not take place and still had to be carried out manually. In addition, this solution has only been used in industries with easily accessible, structured, and self-manageable data sources, e.g., concerning the user account management. In the industrial environment, however, the requirements and data sources are more dynamic and complex, as the equipment and machines are maintained and/or updated by external manufacturers and/or suppliers.

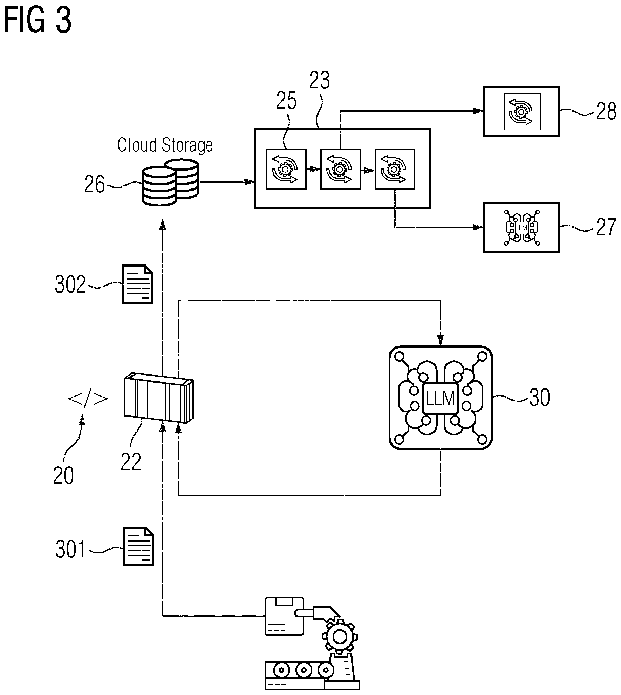

Turning to Figure 3, an embodiment of an automatic data format adaptation is illustrated. Initially, a user, such as a data engineer, may determine the target data format 302, e.g., based on the existing raw data format 301 and/or the input data format 301 required by one or more software applications, such as one or more ML models. The target data format 302 can be passed on to a coding assistant, e.g., a computational model for language processing, LLM, i.e. (what is known as) a large language model 30, which automatically generates a suitable parsing script for automated processing, the so-called parsing of the data, online and/or during operation of the one or more machines and/or the production system. The parsing script, or parser 20, may be (automatically) generated or updated by a computational model for language processing, LLM, i.e. (what is known as) a large language model 30. The data formats may comprise a first data format, i.e. the input data format 301, of the machine data, which is input into the parser, on the one hand, and, on the other hand, the desired output data format 302, i.e. the output data format of the parser, which is output by the parser. As shown in Figure 3 the parser 20 may be deployed or executed on an apparatus 22 such as an edge device.

To ensure traceability, one or more log files may be created during the execution of the parsing script, also referred to as parser 20. The one or more log files may be created by the parser 20 or a runtime environment of the parser 20. The one or more log files may be used to monitor the execution and/or runtime of the parser 20. In the event of an error, which can occur due to (sporadic) changes to the data format due to adjustments to the one or more machines and/or the production system. This error may be detected by monitoring the execution of the parser 20.

In such a situation, the coding assistant, i.e. (a software component or module comprising) the computational model for language processing, LLM, 30 may receive one or more of the following information: the target data format 302, also referred to desired output data format, as, e.g., originally specified by a data engineer, and the (raw) machine data 301 from the current, non-working state (of the parser). In addition, further information comprising one or more of the following may be provided to the coding assistant: the (raw) machine data from the last working state (of the parser 20), the parsing script, and preferably the one or more log files from the last working state (of the parser 20). With this information, the coding assistant 30 is enabled to create a new parsing script that is adapted to the changed (raw) machine data.

The adapted or updated script, i.e. parser 20, may not be directly deployed, but rather is tested before live operation in the production system. That is, before deployment and/or implementation into live operation the output of the updated parser is compared to the desired output data format. If the output of the parsing script does not match the specified desired output data format, or if errors occur during testing of the parsing script in non-productive operation, the coding assistant 30 may perform iterative adjustments to the parsing script until a match is obtained. For this purpose, error messages may be generated, e.g., by the coding assistant and/or may be comprised in the updated parsing script in order to be output by the updated parsing script (in order to be used by the coding assistant to mitigate the error). Furthermore, the difference between the different versions of the (updated) parsing scripts may be determined and/or used for the creation of an updated version of the parsing script and/or may be brought to the attention of a user. After successful validation and/or adjustment, the parsing script may be deployed into live operation and/or the original parsing script, i.e. a previous version, is automatically replaced, e.g., overwritten. This marks the completion of the automatic adaptation of the parser 20 and/or the data format.

An exemplary embodiment is described in the following. In the productions system, e.g., at the level of the shop floor, there may be provided a machine client for one or more machines, and in particular for each machine. The machine client may be provided in the form of a software application running on a computer, e.g., an edge device, for example together with the machine's operating software. The machine manufacturer may publish software updates, e.g., at regular intervals, that contain new or amended functions of the machine. In addition, a user may modify the parameters of the machines and/or the machine's software. The machine data present and/or produced may thus be collected, received, processed and/or transmitted by machine client. The machine data may thus be processed locally or may be transmitted to a cloud infrastructure for further processing. For example, the machine data may serve for inference by one or more data processing pipelines, e.g., machine learning pipelines 25. For the training of the one or more ML models, the machine data may thus be transferred through an edge layer, e.g., by said edge device, to a central instance, such as a cloud infrastructure.

Thus, for example in the case of a user changing the parameters in the machine's operating software or in case a software update is installed on the machine, this can (significantly) change the output data format of the machine data. This can in turn lead to a runtime error in the edge layer, e.g., the edge device, and/or interrupt the (pre-)processing or transformation of the machine data. As a consequence, on-premise model inference at the edge layer may be stopped or interrupted and the (relevant) machine data may no longer be received, transmitted, and/or processed on the edge layer or sent to the cloud. Up to now, a user, such as a data engineer, had then to analyze the error, understand which changes triggered the error, and integrate those changes into the parsing script.

Another exemplary embodiment is described in the following. For example, after uploading the machine data to a central instance, e.g. in a cloud infrastructure, e.g. in a cloud storage 26, the machine data can be used as a basis for inference, or for training a machine learning model, or for visualization on a display, as e.g. described herein in connection with Figure 1. However, this may also require a transformation of the existing machine data. Thus, such inference, training and/or display is dependent on the format of the machine data. In the event of a change in the machine data format, the transformation logic, as defined by and/or in the parser, can fail. In such cases, and in particular in case of an error, a template, e.g., in the form of a prompting script, may be used to automatically adjust the transformation logic in the parsing script.

Hence, it is proposed to make use of a specified target data format, i.e. the (desired) output data format of the parsing script and/or the input data format of a software module for further processing the machine data. This enables continuous operation of the software application, e.g., machine learning application. Existing solutions are limited to only analyzing the incoming (raw) machine data formats and their structures for possible changes and issuing a notification in the event of a modification. Another significant difference of the present invention is the implemented automation of the process of updating the parser and/or the data format adaptation. Instead of having to manually create a parsing script by a data engineer, it is now generated by an automated coding assistant. This leads to a significant reduction in both the time required and the risk of potential errors.

In addition, the continuous, automated adaptation of the parsing script in live operation is a feature that sets apart the solutions proposed herein from existing solutions. Traditional solutions require the data engineer to manually correct the parsing logic in the event of an error, which can lead to both production interruptions and the use of additional working time.

Implementing automated parsing script adaptation significantly streamlines and simplifies this process.

The automatism, e.g., comprising the LLM 30, proposed herein may be implemented as a software component on an edge layer, e.g. on one or more edge device.

The present disclosure may be particularly relevant for the further processing and/or storing, and in particular when using one or more machine learning, ML, models. In such areas, preprocessing of the (raw) machine data, and in particular parsing, is essential to convert the machine data into a format required for the ML system, and ML model in particular. A common problem that occurs is the change in the structure of the (raw) machine data. Such changes can lead to the failure of the data-driven applications and affect all subsequent processes. Fixing this issue used to involve a lot of manual effort because the parsing scripts need to be corrected. This problem is particularly common in production environments. The reason for this is that the data sources in these environments are often plants and machines that are produced and updated by external manufacturers. In such situations, the use of the solutions could provide significant benefits.

As shown in Figure 3, (pre-)processed and/or parsed machine data, or at least part of the machine data can be transmitted by the edge device to a cloud platform, which comprises a cloud storage, where the machine data can be stored. The cloud platform may further comprise a processing pipeline 23 for further processing the (pre-)processed and/or parsed machine data (or part thereof). Such a processing pipeline may serve for providing training data for (re-)training a ML model 28. The ML model and/or the (re-)training may also take place on the cloud platform. Additionally, or alternatively, the processing pipeline 25 may serve for providing the machine data (or part thereof) to a (already trained) ML model 27, also deployed on the cloud platform, where the (pre-)processed and/or parsed machine data is input into the ML model for the ML model, in particular perform a classification of the machine data and/or to infer one or more properties used for analyzing the machine data, e.g. in order to control the production process or one or more machines in the production system.

As mentioned, the computational model for language processing 30 may serve for updating the parser 20, i.e. the parsing script. An update may be understood as an upgrade, a continuation, a successor model or an improvement. That is, a prior version of the parser 20 may be replaced with an updated version, or the prior version of the parser may be changed and thus may thereby become the updated version of the parser. To that end, the (program) code of the parsing script may be changed to comprise additional or changes functionalities. Thus, the parsing logic of the parser which is implemented in the parsing script may be different between two versions of the parsers, i.e. between the first and second, updated version of the parser 20. It also should become clear that the parser 20 is preferably deployed on the edge device 22 but may instead also be deployed on the cloud platform, e.g. as part of the processing pipeline 25. In addition to the parser 20 the computational model for language processing 30 may be deployed on the edge device 22. However, similarly to the parser the computational model for language processing 30 may be deployed on the cloud platform as well. The parser (and/or the runtime of the parser) may be communicatively coupled to the computational model for language processing, LLM, 30. To that end one or more application programming interface, APIs may be used in order to allow exchange of data between the parser 20 and the LLM 30.

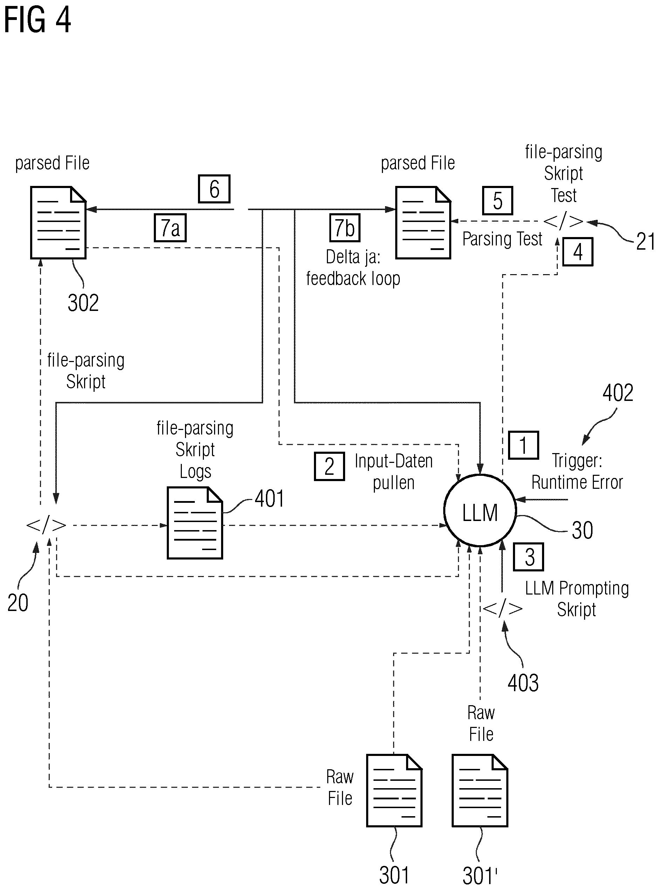

In Figure 4 further details of the update of the parser 20 using the computational model for language processing, LLM, 30 are illustrated. As before, machine data may be received by the parser 20. The machine data 301 may be in form of a file and/or may be in certain data format, i.e. as output by the one or more machines generating the machine data. The parser 20 provides the parsed machine data 302 as an output, also preferably in the form of a file and/or in the desired output data format. The parser 20 may be programmed to create one or more log files 401 comprising data representing one or more (runtime) events that occurred during or as a result of the execution of the parser 20.

Now, in case of machine data being incompatible with the parser 20 and/or the parsing logic, an error may be thrown by the parser. For the error detection a runtime error detection may be used. The runtime error detection is a software verification method that analyzes a software application as it executes and reports defects that are detected during that execution. Runtime errors 402 may comprise one or more of the following: Race condition, Exception, Resource leak, Memory leak, Security attack vulnerability (e.g., SQL injection), Null pointer, Uninitialized memory, Buffer overflow. Such error may be caused by the parser processing incompatible machine data. Hence, detection of a runtime error 402 may trigger a parser update in a step "1". Hitherto, input data may be gathered and/or input into the LLM 30 in a step "2". To that end, a prompting script 403 may be used in a step "3". The prompting script 403 may define the input data to be gathered and input into the LLM 30. The prompting script 403 may also comprise instructions for the LLM 30, i.e. the LLM 30 may be prompted to generate a new parser 21, i.e. parsing script or parsing logic, based on the input data in a step "4". The prompting may comprise instructions for the LLM 30 to generate a program code capable of converting the incompatible machine data 301' into the desired output data format.

The data to be read in and considered by the LLM 30 for generating a new or updated parser 21 in step "4" may comprise the incompatible machine data 301', e.g., in said file and/or format, a desired output data format, e.g., machine data in the desired output data format 302.

The (updated) parser 21 can then be subject to a test in a step "5". The (previously incompatible) machine data can be input in the updated parser 21 and the output of the (updated) parser 21 can be compared to the desired output data format in a step "6". In case the machine data processed by the (updated) parser matches the desired output data format, the parser can be deployed in a step "7a". In case the machine data processed by the parser 21 does not yield the desired output data format, the LLM 30 may again be instructed to update the parser ion a step "7b". To that end, the updated parser may be used as input again (together with the one or more inputs already described) in order to arrive at a re-updated parser. For the re-updated parser the test may be repeated, e.g. until the (previously incompatible) machine data matches the desired output data format when processed by the re-updated parser.

As before, an (re-)update may be understood as an upgrade, a continuation, a successor model or an improvement to the parser 20. Hence, the LLM 30 may be prompted, e.g., iteratively, to generate a new parser code capable of converting the incompatible machine data into the desired output data format. The prompting may comprise a fault indicator caused by an execution of the (updated) data parser, wherein for example, the fault indicator is obtained from a runtime environment of the updated parser.

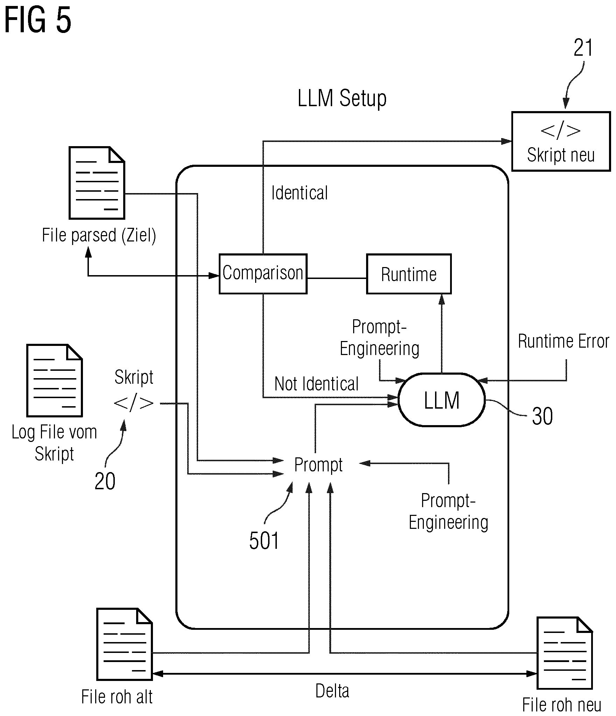

Figure 5 illustrates the test and/or validation of a parser update. As described herein, an LLM 30 may be prompted with input data, e.g. as mentioned in the above, such as the (previous) parser 20, e.g. in the form of a script, the previously compatible machine data, the now incompatible machine data, and/or the parsed machine data in the desired output format, i.e. the machine data in the desired output format, i.e. parsed based on compatible machine data input. In addition, a prompt 501 may be engineered, i.e. prompt engineering may be performed to instruct the LLM to perform the task of generating an updated parser 21. The parser update may be triggered or initiated by a runtime error, as e.g. described herein. The runtime error or any information relating to the runtime error may also be input into the LLM 30, e.g. as part of the prompt 501 or may cause the execution of the LLM 30 based on the prompt 501. As a result, an updated parser 21 may be obtained that may at first be executed in a test environment. The machine data parsed by the previous version of the parser 20 may be compared with the machine data parsed by the updated version of the parser 21 in order to determine whether the updated parser 21 also produces the desired output data format, e.g., based on the compatible machine. If the result of the previous version and the updated version are identical the updated parser 21 may be deployed. In case the result of the previous version 20 and the updated version 21 are not identical the LLM may be instructed to provide another, or (re-)updated version of the parser. The same or another prompt 501 may be used to that end in order for the LLM 30 to output the (re-)updated parser 21.

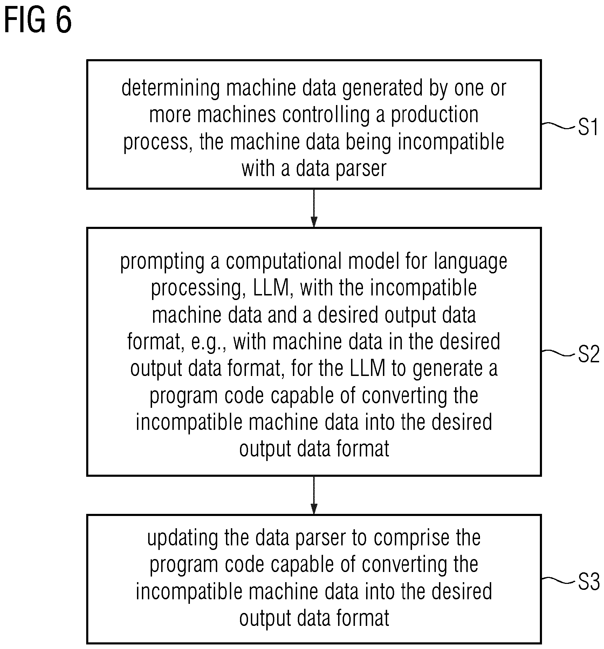

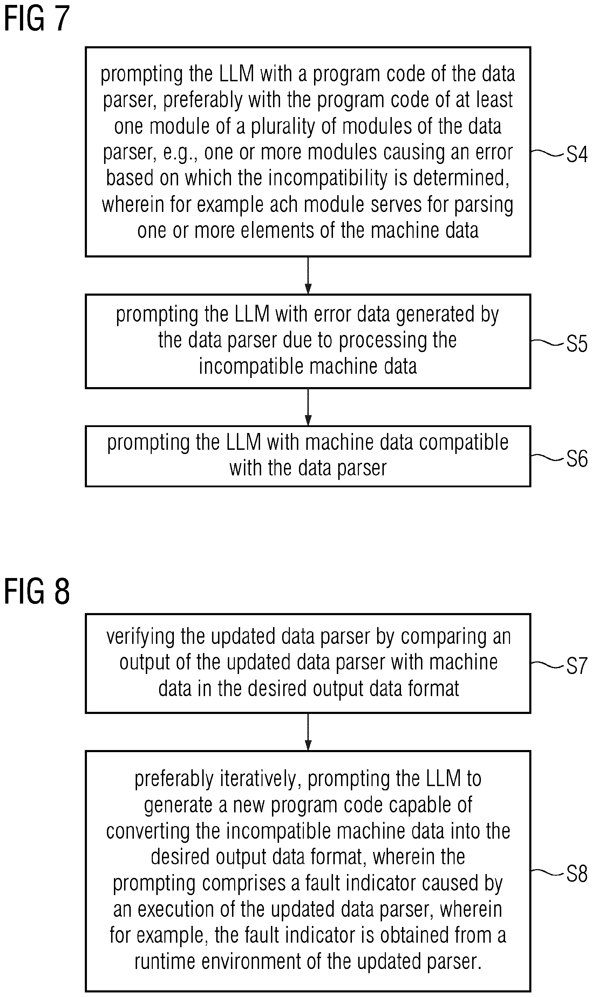

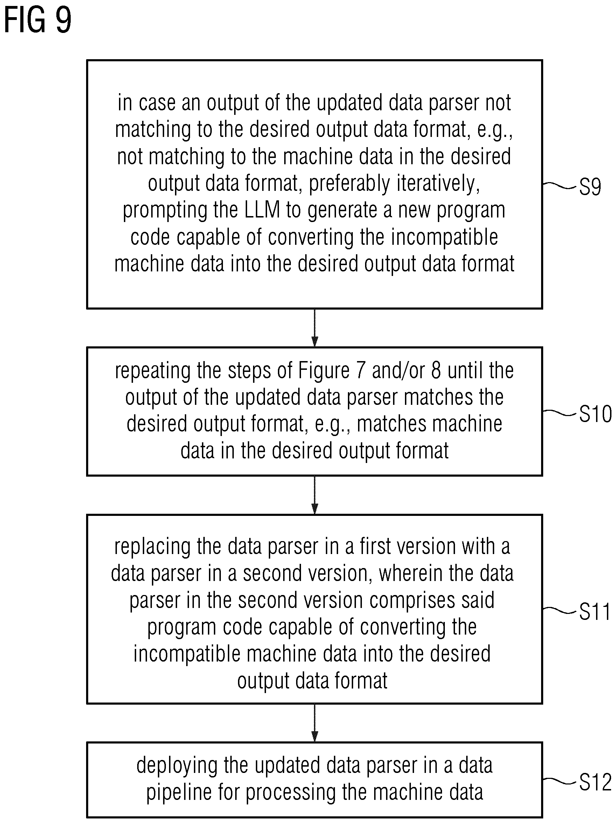

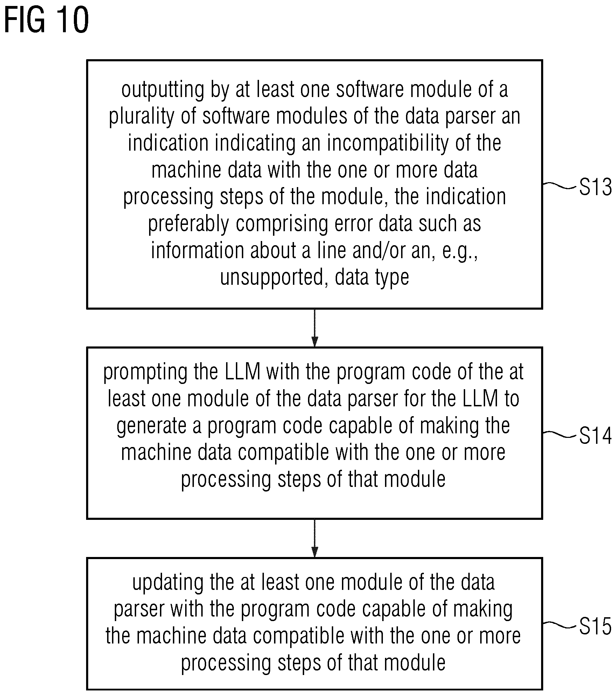

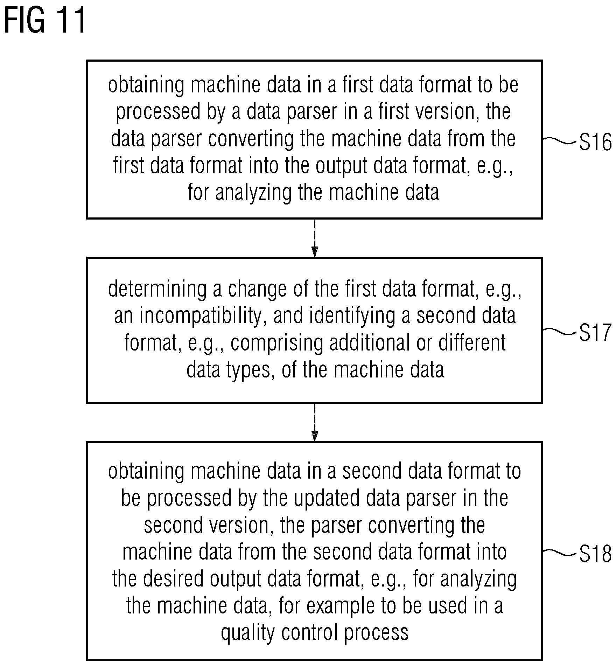

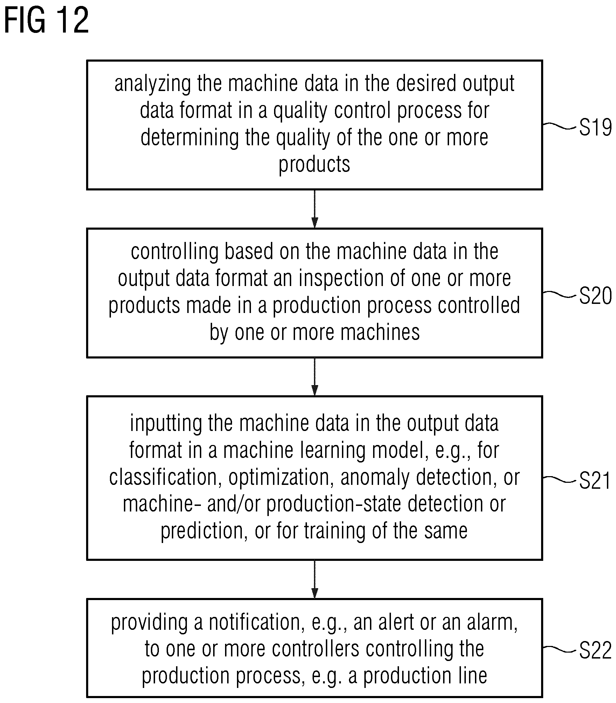

Figures 6 to 12 illustrate further exemplary, preferably computer-implemented, steps S1-S22 for automatic data format adaptation and/or data parser update.

The steps may be implemented by an apparatus such as an edge device. The steps may also be implemented by one or more computing devices, e.g., comprising one or more processors, on a cloud platform. The steps may be implemented by program code, e.g. in a programming language, or binary code of a computer program. The computer program comprising said program code may be stored in a memory, e.g. of said apparatus or said cloud platform.

## Claims

1. A, preferably computer-implemented, method of automatic data format adaptation, the method comprising the steps of:
determining machine data generated by one or more machines (1, 2) controlling a production process (11, 12), the machine data being incompatible with a data parser (20),
prompting a computational model for language processing (30), LLM, with the incompatible machine data and a desired output data format, e.g., with machine data in the desired output data format, for the LLM (30) to generate a program code capable of converting the incompatible machine data into the desired output data format,
updating the data parser (20) to comprise the program code capable of converting the incompatible machine data into the desired output data format.

2. The method according to the preceding claim,
prompting the LLM (30) with a program code of the data parser (20), preferably with the program code of at least one module of a plurality of modules of the data parser (20), e.g., one or more modules causing an error based on which the incompatibility is determined, wherein for example each module serves for parsing one or more elements of the machine data, and/or
prompting the LLM (30) with error data generated by the data parser due to processing the incompatible machine data, and/or
prompting the LLM (30) with machine data compatible with the data parser (20).

3. The method according to any one of the preceding claims,
verifying the updated data parser (21) by comparing an output of the updated data parser (21) with machine data in the desired output data format.

4. The method according to any one of the preceding claims,
preferably iteratively, prompting the LLM (30) to generate a new program code capable of converting the incompatible machine data into the desired output data format, wherein the prompting comprises a fault indicator caused by an execution of the updated data parser (21), wherein for example, the fault indicator is obtained from a runtime environment of the updated parser.

5. The method according to any one of the preceding claims,
in case an output of the updated data parser (21) not matching to the desired output data format, e.g., not matching to the machine data in the desired output data format, preferably iteratively, prompting the LLM to generate a new program code capable of converting the incompatible machine data into the desired output data format.

6. The method according to any one of the preceding claims,
repeating the steps of the claims 5, 6 and/or 7 until the output of the updated data parser (21) matches the desired output format, e.g., matches machine data in the desired output format.

7. The method according to any one of the preceding claims,
deploying the updated data parser (21) in a data pipeline for processing the machine data.

8. The method according to any one of the preceding claims,
wherein updating the data parser (20) comprises replacing the data parser in a first version (20) with a data parser in a second version (21), wherein the data parser in the second version (21) comprises said program code capable of converting the incompatible machine data into the desired output data format.

9. The method according to any one of the preceding claims,
outputting by at least one software module of a plurality of software modules of the data parser (20) an indication indicating an incompatibility of the machine data with the one or more data processing steps of the module, the indication preferably comprising error data such as information about a line and/or an, e.g., unsupported, data type, and/or prompting the LLM (30) with the program code of the at least one module of the data parser (20) for the LLM (30) to generate a program code capable of making the machine data compatible with the one or more processing steps of that module, and/or updating the at least one module of the data parser (20) with the program code capable of making the machine data compatible with the one or more processing steps of that module.

10. The method according to any one of the preceding claims,
obtaining machine data in a first data format to be processed by a data parser in a first version (20), the data parser (20) converting the machine data from the first data format into the output data format, e.g., for analyzing the machine data, and/or determining a change of the first data format, e.g., an incompatibility, and identifying a second data format, e.g., comprising additional or different data types, of the machine data, and/or
obtaining machine data in a second data format to be processed by the updated data parser in the second version (21), the updated data parser (21) converting the machine data from the second data format into the desired output data format, e.g., for analyzing the machine data, for example to be used in a quality control process.

11. The method according to any one of the preceding claims,
analyzing the machine data in the desired output data format in a quality control process (11, 12) for determining the quality of the one or more products, and/or controlling based on the machine data in the output data format an inspection of one or more products made in a production process (11, 12) controlled by one or more machines (11, 12).

12. The method according to any one of the preceding claims,
inputting the machine data in the output data format in a machine learning model, e.g., for classification, optimization, anomaly detection, or machine- and/or production-state detection or prediction, or for training of the same.

13. The method according to any one of the preceding claims,
providing a notification, e.g., an alert or an alarm, to one or more controllers, e.g. said one or more machines (1, 2), controlling the production process (11, 12), e.g. a production line.

14. An apparatus (22, 23), preferably comprising a processor and a memory, operative to perform the method steps of any one of the preceding claims.

15. A computer program comprising program code that when executed performs the method steps of any one of the preceding claims 1-13.
